(19) Europäisches Patentamt
European Patent Office
Office européen des brevets

(11) **EP 4 246 175 B1**

(12) **EUROPEAN PATENT SPECIFICATION**

(45) Date of publication and mention
of the grant of the patent:
**10.12.2025 Bulletin 2025/50**

(21) Application number: **22162861.3**

(22) Date of filing: **18.03.2022**

(51) International Patent Classification (IPC):
*G01S 7/40* (2006.01)     *G01S 7/41* (2006.01)
*G01S 13/34* (2006.01)     *G01S 7/288* (2006.01)
*G01S 7/292* (2006.01)

(52) Cooperative Patent Classification (CPC):
**G01S 7/4056; G01S 7/288; G01S 7/2883;
G01S 7/2926; G01S 7/415; G01S 13/34;
G01S 13/341**

(54) **ITERATIVE CALIBRATION OF DYNAMIC AND STATIC VEHICLE DATA IN A VEHICLE RADAR SYSTEM**

ITERATIVE KALIBRIERUNG VON DYNAMISCHEN UND STATISCHEN FAHRZEUGDATEN IN EINEM FAHRZEUGRADARSYSTEM

ÉTALONNAGE ITÉRATIF DE DONNÉES DYNAMIQUES ET STATIQUES DE VÉHICULES DANS UN SYSTÈME RADAR DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.09.2023 Bulletin 2023/38**

(73) Proprietor: **Magna Electronics Sweden AB
447 37 Vårgårda (SE)**

(72) Inventors:
• **SCHMIED, Julian
97464 Niederwerrn (DE)**
• **GEISSLER, Simon
97464 Niederwerrn (DE)**

(74) Representative: **Westpatent AB
Almekärrsvägen 11
443 39 Lerum (SE)**

(56) References cited:
**GB-A- 2 363 016          US-A1- 2002 165 650
US-A1- 2015 070 207**

**Description**

The present disclosure relates to a vehicle radar system comprising at least one transceiver arrangement arranged to generate, transmit radar signals, and to receive reflected signals.

Many vehicle radar systems comprise means for generating radar signals, for example so-called FMCW (Frequency Modulated Continuous Wave) chirp signals, that are transmitted, reflected and received by means of appropriate antennas comprised in radar transceivers in the radar system.

Some radar transceivers are also arranged to estimate a bearing to a detected object in addition to distance and relative velocity. This bearing estimation can be achieved by using array antennas configured to determine relative phases of waveform components received at the different antenna elements in the antenna array. Bearing estimation, i.e., estimating relative angle to a detected object with respect to, e.g., a boresight direction of the radar transceiver is a difficult problem in general. One aspect which makes the problem particularly difficult is that the bearing estimation requires careful calibration of the radar transceiver in order to be accurate.

Due to misalignment, which can be due to mounting error or accidents, the radar transceivers may need calibration. Also, the vehicle host velocity and yaw rate are important inputs to the radar signal processing. Their potential bias offsets may also need calibration. Such a calibration can be performed during manufacture and mounting in a factory, as well as during normal running of a vehicle equipped with the radar system.

Known algorithms for calibrating a radar transceiver to improve bearing estimation accuracy include methods that use a ratio between relative velocity of a detected stationary object compared to a velocity of the radar transceiver, e.g., a velocity of the vehicle on which the radar transceiver is mounted. The bearing $\theta_{GND}$ can then be estimated or otherwise obtained from the expression

$$\cos \theta_{GND} = \frac{v_{GND}}{v_{host}}$$

where $v_{GND}$ represents relative velocity obtained from Doppler measurement, and where $v_{host}$ represents radar transceiver velocity obtained from, e.g., a Global Positioning System (GPS) receiver or from a wheel speed sensor.

The majority of so called "online-algorithms" for calibrating radar transceivers, e.g., bearing information, behind a fascia or due to mounting tolerances, rely on accurate vehicle dynamic data information sent by car to sensor. Such an approach easily suffers in performance if for example both host velocity data and Doppler measurements are not 100 % accurate, which they never will be. Also, subsequent software modules, for example modules relating to detection, processing and tracking, rely on accurate vehicle dynamic data.

The document GB 2 363 016 A relates to an automobile radar comprising means for measuring radar boresight misalignment by detecting the presence of apparent variations in the spacing of stationary objects from the direction of motion of the host vehicle and utilizing such detection to compensate for any misalignment.

The document US 2015/070207 A1 relates to a vehicle radar sensor that includes self calibration functionality for performing angle calibrations for the sensor when the sensor is mounted within the vehicle. Collected infrastructure information may be used to generate a Doppler Monopulse Image (DMI) or other graph for the sensor. A clutter ridge within the DMI or other graph may then be analyzed to determine calibration data for the sensor. For example, peaks and variances for a plurality of angles of arrival may be identified, and calibration lookup tables can be formed that are indexed by monopulse angle or monopulse phase difference. If there are multiple peaks within the clutter ridge for a particular angle, each peak may be recorded along with a corresponding variance value.

The object of the present disclosure is thus to provide a vehicle radar system where the calibration errors that are due to erroneous parameter values that are related to, or affected by, vehicle dynamics and statics for a host vehicle are reduced.

This object is obtained by means of a vehicle radar system comprising a control unit and at least one transceiver arrangement arranged to generate and transmit radar signals and to receive reflected signals that have been reflected by ground stationary target objects. The vehicle radar system is adapted to identify at least one ground stationary target object, and to follow the ground stationary target object for a plurality of times. For each one of at least two different values of a parameter related to, or affected by, vehicle dynamics or vehicle statics for a host vehicle, the parameter values being constituted by assumptions, the control unit is adapted to calculate a coherently integrated complex signal representing the detected ground stationary target object for each one of the plurality of times using an assumption for said parameter such that a resulting signal magnitude is obtained for each assumption of the parameter value. The control unit is further adapted to compare the resulting signal magnitudes, and to choose the parameter assumption that is associated with the highest signal magnitude as the most correct parameter assumption.

This enables prior calibration of dynamic and static vehicle data before further attempts to calibrate static vehicle data compensation values, such as angle error compensation values, or vice versa.

According to some aspects, the parameter assumption is at least one of

$v_{host} \triangleq$ speed of host vehicle in [m/s];
$\omega \triangleq$ yaw rate of host vehicle in [rad/s];
assumed rotation point;
$\theta_{GND} \triangleq$ bearing of ground stationary target, azimuth angle, in [rad];
elevation angle in [rad]; and
transceiver arrangement mounting position/mounting offset.

This means that the present disclosure is applicable for a wide variety of parameters.

According to some aspects, the vehicle radar system is a frequency modulated continuous wave (FMCW) radar system. The radar signal comprises a plurality of FMCW ramps with a frequency that varies between a low frequency $f_{low}$ to a high frequency $f_{high}$ over the course of each ramp.

According to some aspects, each radar cycle has a duration of a cycle time and comprises a plurality of pulse blocks. Each pulse block comprises a plurality of FMCW ramps and has a duration of a block time. Between two consecutive pulse blocks there is a certain idle time during which there are no FMCW ramps. According to some further aspects, a Range-Doppler matrix is prepared for each pulse block, one at a time.

This enables coherent signal integration, which allows for radar signal processing (RSP) advantages such as increased Signal-to-Noise Ratio (SNR).

According to some aspects, the FMCW ramps are constituted by non-uniform FMCW waveforms comprising any variety of time/phase/frequency modulation on top.

This is advantageous since traditional FMCW radars are well known to suffer from interference from other sensors with similar waveforms.

The above problem is also solved by means of methods and vehicles that are associated with the above advantages.

BRIEF DESCRIPTION OF THE DRAWINGS

The present disclosure will now be described more in detail with reference to the appended drawings, where:

Figure 1          shows a schematic top view of a vehicle;
Figure 2          shows a schematic representation of how the signal magnitude varies during coherent integration of complex values representing a detected ground stationary target object;
Figure 3A-3E    show representations of the coherent integration signal range-Doppler matrices for a default value of a host velocity as well as for different assumptions of the host velocity;
Figure 4          shows a flowchart for a method according to the present disclosure;
Figure 5          shows an example control unit;
Figure 6          shows an example computer program product; and
Figure 7          shows pulse blocks during a radar cycle.

DETAILED DESCRIPTION

Aspects of the present disclosure will now be described more fully hereinafter with reference to the accompanying drawings. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

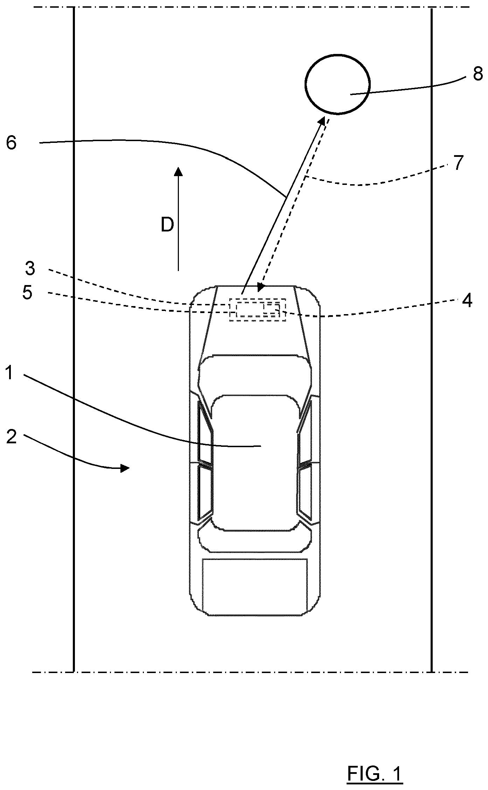

Figure 1 schematically shows a top view of a host vehicle 1 arranged to run on a road 2 in a direction D, where the host vehicle 1 comprises a vehicle radar system 3 which is arranged to distinguish and/or resolve single targets from the surroundings by transmitting signals 6 and receiving reflected signals 7 and using a Doppler effect in a previously well-known manner. The vehicle radar system 3 is arranged to provide azimuth angles of possible objects 8 by simultaneously sampling and analyzing phase and amplitude of the received signals 7.

More in detail, the vehicle radar system 3 comprises a control unit 4 and at least one transceiver arrangement 5, each transceiver arrangement 5 being arranged to generate and transmit radar signals 6 and to receive reflected signals 7 that have been reflected by objects 8.

According to some aspects, each transceiver arrangement 5 is arranged to transmit a frequency modulated continuous wave (FMCW) radar signal over the radar bandwidth, where a frequency chirp is swept over the radar bandwidth in cycles. Other types of radar signal formats may also be used, such as band-spread radar signals where orthogonal codes are used to spread a modulated signal over a wide frequency band, or an orthogonal frequency division multiplexed (OFDM) radar signal.

Given an FMCW radar signal format, the radar signal 6 comprises a plurality of FMCW ramps with a frequency that varies between a low frequency $f_{low}$ to a high frequency $f_{high}$ over the course of each ramp.

The distance D to a target object 8 may be determined based on a first Discrete Fourier Transform (DFT), or Fast Fourier Transform (FFT), and the radial velocity or Doppler frequency may be determined based on a second DFT or FFT, in a known manner. The resulting frequency spectrum of applying a range FFT and a Doppler FFT is often denoted a range-Doppler map or R-D map for short. A range-Doppler map is a matrix of complex values, where each column index corresponds to backscatter energy received at a given radar antenna from reflections at a given range, and where each row index corresponds to radar backscatter energy received at a given radar antenna from reflections at a given radial velocity relative to the position of the transceiver arrangement 5.

In the following it is assumed that the target object 8 is a ground stationary target object, i.e., a target object that does not move relative to the environment outside the vehicle radar system 3 or relative to a global coordinate system.

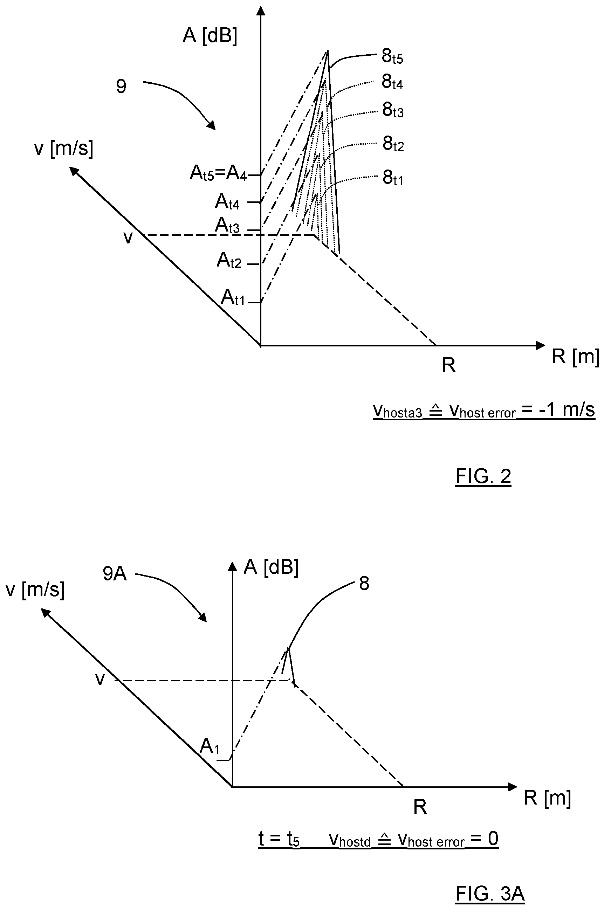

According to the present disclosure, with reference also to Figure 2, the vehicle radar system 3 is adapted to identify at least one ground stationary target object 8, and to follow the ground stationary object 8 for a plurality of times $t_1$-$t_5$. This means that the ground stationary target object 8 is followed during the sequence of time instants $t_1$-$t_5$, and how many time instants there are in practice is limited by during how long time it is possible to follow the ground stationary target object 8 by means of the vehicle radar system 3. Of course there are also hardware limitations such as for example available memory.

For at least two different values of a parameter related to, or affected by, vehicle dynamics or statics for the host vehicle 1, the control unit 4 is adapted to calculate the coherently integrated complex signal representing the detected ground stationary target object $8_{t1}$, $8_{t2}$, $8_{t3}$, $8_{t4}$, $8_{t5}$ using said parameter $v_{host}$, $\omega$, $\theta_{GND}$, for the plurality of times $t_1$-$t_5$ such that a resulting signal magnitude $A_{t5}$ is obtained at a final time $t_5$, here a fifth time $t_5$. The parameter is according to some aspects one of the host vehicle's velocity $v_{host}$, its yaw rate $\omega$, and the bearing $\theta_{GND}$, i.e. the azimuth angle, to the ground stationary target object 8. Other examples are assumed rotation point and transceiver arrangement mounting position and/or mounting offset, where the latter for example can be defined by means of azimuth mounting angle, elevation mounting angle, yaw angle, pitch angle, roll angle, and x/y/z-mounting offsets.

This is illustrated for a parameter relating to host vehicle velocity $v_{host}$ in Figure 2 where, for a consecutive sequence of time instants $t_1$-$t_5$, complex values, representing the coherently integrated signal of a certain detection of the detected ground stationary target object 8, are determined, here positioned in an R-D map 9.

There are at least two different values of the parameter $v_{host}$, in Figure 2 there is a third host vehicle velocity $v_{host3}$ that corresponds to an error of -1 m/s relative a detected default host vehicle velocity $v_{hostd}$. The third host vehicle velocity $v_{host3}$ constitutes an assumption for host vehicle velocity.

As shown on Figure 2, the signal magnitude $A_{t5}$ is a resulting signal amplitude, i.e. a final result of the coherent integration of the complex signal values for the assumption corresponding to the third host vehicle velocity $v_{host3}$ at the sequence of time instants $t_1$-$t_5$.

At each time instant $t_1$-$t_5$, the complex value corresponds to a coherently integrated signal amplitude $A_{t1}$, $A_{t2}$, $A_{t3}$, $A_{t4}$, $A_{t5}$, and the coherently integrated signal amplitude at a final time $t_5$ constitutes the result. In other words, Figure 2 illustrates how the amplitude of the coherently integrated complex signal increases for each time instant $t_1$-$t_5$. The incoherent/instantaneous complex signal amplitude values representing the detected ground stationary target object 8 would all have a substantially equal, or at least similar, amplitude over the time instants $t_1$-$t_5$.

As mentioned previously, there are at least two different values of the parameter related to, or affected by, vehicle dynamics for the host vehicle 1, in this example there are five different values, or assumptions, for the host vehicle velocity $v_{host}$.

There is a default host vehicle velocity $v_{hostd}$, a first host vehicle velocity $v_{host1}$ that corresponds to an error of +1 m/s relative the default host vehicle velocity $v_{hostd}$, a second host vehicle velocity $v_{host2}$ that corresponds to an error of +2 m/s relative the default host vehicle velocity $v_{hostd}$, the third host vehicle velocity $v_{host3}$ that corresponds to an error of -1 m/s relative the default host vehicle velocity $v_{hostd}$, and a fourth host vehicle velocity $v_{host4}$ that corresponds to an error of -2 m/s relative the default host vehicle velocity $v_{hostd}$.

Figure 3A-Figure 3E show resulting signal amplitudes $A_1$, $A_2$, $A_3$, $A_4$, $A_5$ in an R-D map 9A-9E for the default host vehicle velocity $v_{hostd}$ and the assumptions corresponding to the first to fourth host vehicle velocity $v_{host1}$ - $v_{host4}$. Each resulting signal magnitude $A_1$, $A_2$, $A_3$, $A_4$, $A_5$ is a coherent integration of the complex values for these assumptions, constituting a coherently integrated complex signal, as exemplified more in detail for the third host vehicle velocity $v_{host3}$ with reference to Figure 2.

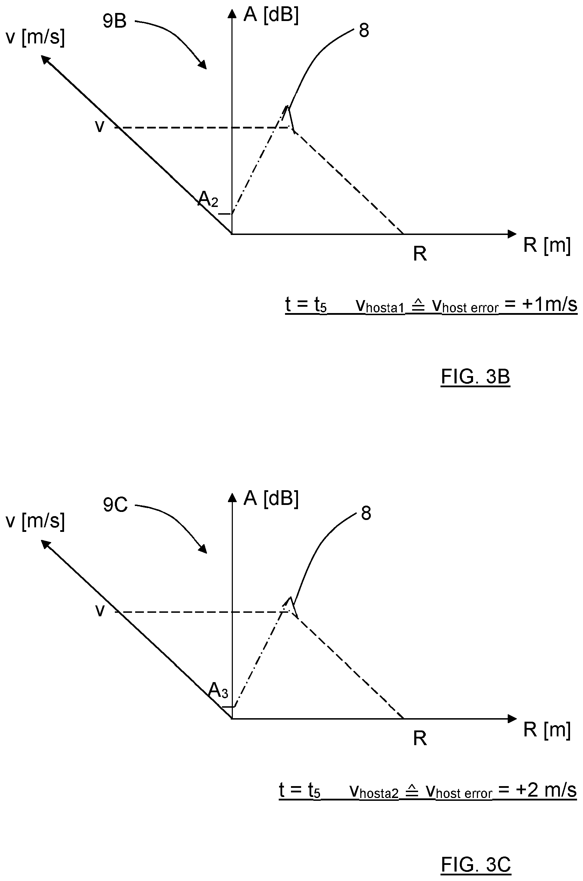

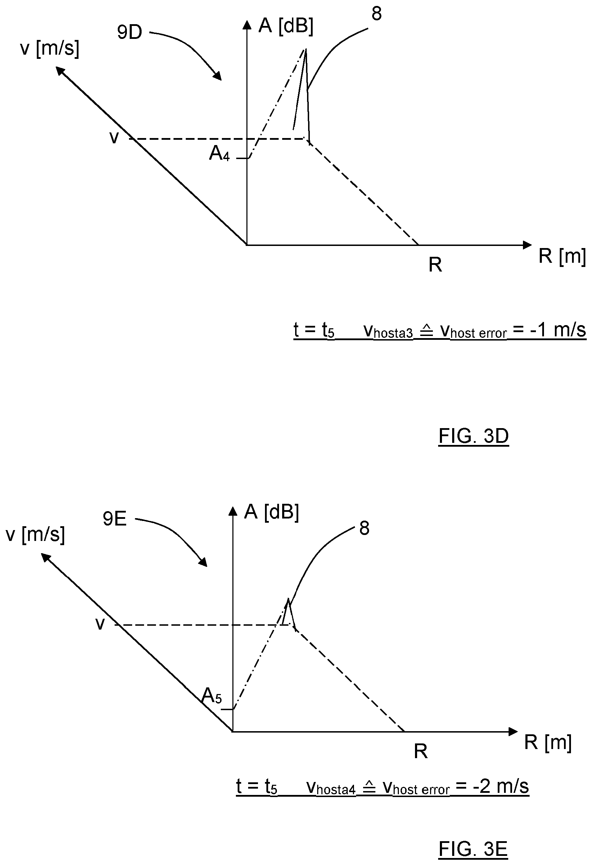

Figure 3A shows the resulting signal amplitude $A_1$ for the default host vehicle velocity $v_{hostd}$, Figure 3B shows the resulting signal amplitude $A_2$ for the first host vehicle velocity $v_{host1}$, Figure 3C shows the resulting signal amplitude $A_3$ for the second host vehicle velocity $v_{host2}$, Figure 3D shows the resulting signal amplitude $A_4$ for the third host vehicle velocity $v_{host3}$, and Figure 3E shows the resulting signal amplitude $A_5$ for the fourth host vehicle velocity $v_{host4}$.

The control unit 4 is further adapted to compare the signal magnitudes $A_1$, $A_2$, $A_3$, $A_4$, $A_5$, and to choose the parameter value that is associated with the highest signal magnitude $A_4$, $A_{t5}$ as the most correct parameter value. In this example, the third host vehicle velocity $v_{host3}$ is associated with the highest signal magnitude $A_4$, $A_{t5}$.

The above procedure can be performed for any suitable parameters such a for example yaw rate and azimuth angle $\theta_{GND}$, and for any suitable number of times during a time interval for each assumption once a ground stationary target object has been identified and followed during the time interval. Suitably, the above procedure is performed for a plurality of ground stationary target objects. Examples of signal processing techniques for identifying and following a target object are for example disclosed in EP 3098623.

In other words, M observations are created over time for a sequence of time instants $t_1$ ... $t_M$, M > 1, as described above for each ground stationary target object. For each certain assumption of a certain parameter, the signal is coherently integrated over time. After a plurality of radar cycles, as long as ground stationary target object can be detected, the best integration signal gain over the whole observation time is determined to provide a first estimate of an error for the parameter currently tested in accordance with the present disclosure.

The present disclosure enables prior calibration of dynamic and static vehicle data before further attempts to calibrate static vehicle data compensation values, such as angle error compensation values, or vice versa.

The following equation describes measured speed over ground for ground stationary target objects, in respect of a 2D-dimensional target-movement:

$$v_{GND} = (Y_0 \cdot \omega - v_{Host}) \cdot \cos(\theta_{GND}) - X_0 \cdot \omega \cdot \sin(\theta_{GND}). \qquad [1]$$

Here

$$v_{GND} \triangleq speed\ of\ a\ ground\ stationary\ target\ in\ \left[\frac{m}{s}\right]$$

$Y_0$, $X_0 \triangleq$ *cartesion coordinates of ground stationary target in* [m] $\theta_{GND} \triangleq$ *bearing of ground stationary target in* [rad] and

$$v_{Host} \triangleq speed\ of\ host\ vehicle\ in\ \left[\frac{m}{s}\right]$$

$$\omega \triangleq yaw\ rate\ of\ host\ vehicle\ in\ \left[\frac{rad}{s}\right]$$

This is a limited model, where for example elevation influence, yaw/pitch/roll errors are not involved, but could be added and of course also be calibrated on.

Entering an environment, N ground stationary target objects 8 are available as well as sufficient signal to noise ratio to calculate N ground stationary target objects for a given radar cycle. As long as this signal is present, according to some aspects, the signal processing techniques disclosed in EP 3098623 will allow to predict and identify the signal source for several radar cycles to be followed, as long as these ground stationary target objects are measurable, which is linked to ego vehicle movement, since the assumption has been made that only stationary targets are used.

Following [1], an observation for one ground stationary target object depends on ego host speed, ego yaw rate and measured azimuth, when

$$X_0 = \sin(\theta_{GND}) \cdot R \qquad ; \qquad Y_0 = \cos(\theta_{GND}) \cdot R$$

where R corresponds to measured range between the ground stationary target object 8 and the transceiver arrangement 5. The signal of one ground stationary target object will be followed under different assumptions.

Assuming one is interested in a yaw rate error, for given assumptions of yaw rate errors $\omega_{error,M} = \omega_{meas} - \omega_{Truth}$, M observations are created over time for a sequence of time instants as described above for each ground stationary target object. After a plurality of radar cycles, as long as the ground stationary target object can be detected, the best integration signal gain over the whole observation time is determined to provide a first estimate of yaw rate error in accordance with the present disclosure.

As equation [1] holds multiple unknown parameters, adaptive beam pass filters for calibrating vehicle dynamic data have to be done sequentially. In practice, it can be easily observed if the host vehicle 1 is driving straight, which would lead to an yaw rate $\omega = 0$. Following ground stationary target objects under this condition, leads to observations for calibrating host vehicle speed in accordance with the present disclosure. After that is known, in non-straight driving situation the yaw rate $\omega \neq 0$ and the yaw error can be calculated.

According to some aspects, the assumptions can be formed in a set of parameters, for example in a manner as illustrated in the example according to the below:

| Assumption No: | Host velocity error in m/s | -1.0 | -0.5 | 0 | 0.5 | 1.0 |
|---|---|---|---|---|---|---|
| Yaw rate error in rad/sec | | | | | | |
| -2.0 | | 1 | 2 | 3 | 4 | 5 |
| -1.0 | | 6 | 7 | 8 | 9 | 10 |
| 0 | | 11 | 12 | 13 | 14 | 15 |
| 1.0 | | 16 | 17 | 18 | 19 | 20 |
| 2.0 | | 21 | 22 | 23 | 24 | 25 |

There are 25 assumptions for the parameters host velocity and yaw rate, this is just an example, where the table can be adapted based on the required accuracy for the parameters in question which are to be tested.

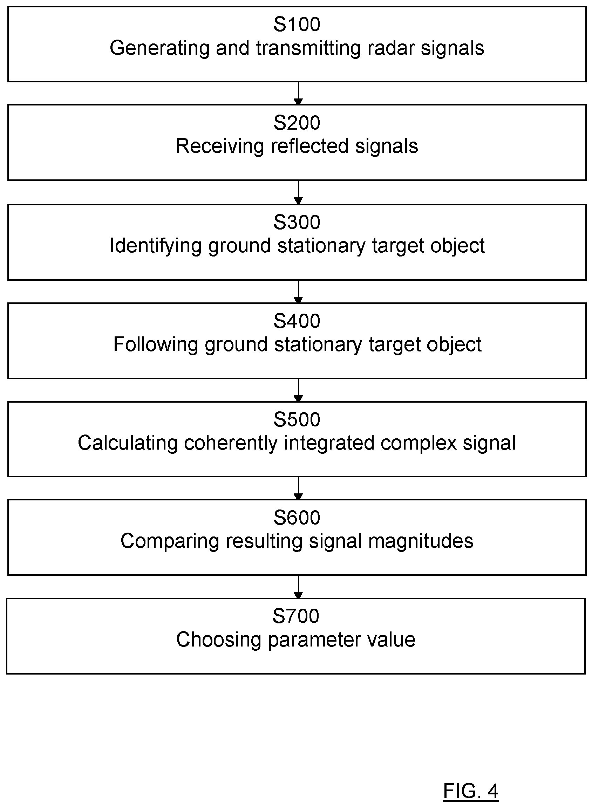

With reference to Figure 4, the present disclosure also relates to a method performed in a vehicle radar system 3. The method comprises generating S100 and transmitting radar signals 6, and receiving S200 reflected signals 7 that have been reflected by ground stationary target objects 8. The method further comprises identifying S300 at least one ground stationary target object 8; and following S400 the ground stationary target object 8 for a plurality of times $t_1$-$t_5$.

For at least two different values of a parameter $v_{host}, \omega, \theta_{GND}$ related to, or affected by, vehicle dynamics or vehicle statics for a host vehicle 1, the method also comprises calculating S500 a coherently integrated complex signal representing the detected ground stationary target object $8_{t1}, 8_{t2}, 8_{t3}, 8_{t4}, 8_{t5}$ for the plurality of times $t_1$-$t_5$, using said parameter $v_{host}, \omega, \theta_{GND}$, such that a resulting signal magnitude $A_1, A_2, A_3, A_4, A_5$ is obtained. Furthermore, the method comprises comparing S600 the resulting signal magnitudes $A_1, A_2, A_3, A_4, A_5$, and choosing S700 the parameter value $v_{host3}$ that is associated with the highest signal magnitude $A_4, A_{t5}$ as the most correct parameter value.

According to some aspects, the parameter value is at least one of

$v_{host} \triangleq$ speed of host vehicle in [m/s];
$\omega \triangleq$ yaw rate of host vehicle in [rad/s];
assumed rotation point;
$\theta_{GND} \triangleq$ bearing of ground stationary target, azimuth angle, in [rad];
elevation angle in [rad]; and
transceiver arrangement mounting position/mounting offset.

According to some aspects, the radar signal 6 comprises a plurality of FMCW ramps with a frequency that varies between a low frequency $f_{low}$ to a high frequency $f_{high}$ over the course of each ramp.

According to some aspects, each radar cycle has a duration of a cycle time $t_c$ and comprises a plurality of pulse blocks 40, each pulse block 40 comprising a plurality of FMCW ramps and having a duration of a block time $t_B$, where between two consecutive pulse blocks 40 there is a certain idle time $t_i$ during which there are no FMCW ramps.

According to some aspects, a Range-Doppler matrix 9 is prepared for each pulse block 40, one at a time.

According to some aspects, the FMCW ramps are constituted by non-uniform FMCW waveforms comprising any variety of time/phase/frequency modulation on top.

This is advantageous since traditional FMCW radars are well known to suffer from interference from other sensors with similar waveforms.

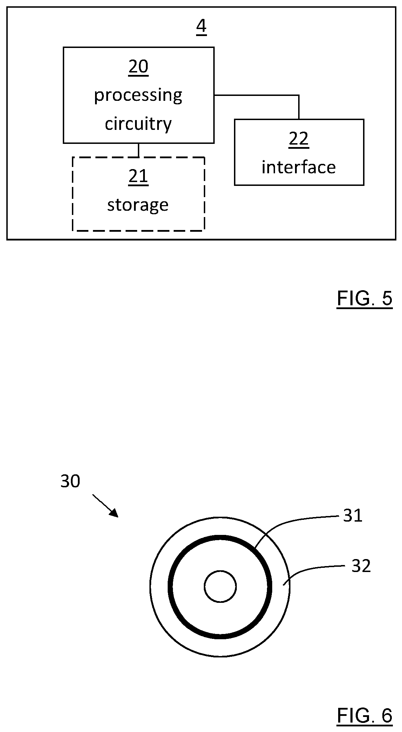

Figure 5 schematically illustrates, in terms of a number of functional units, the components of a control unit according to an embodiment of the discussions herein. Processing circuitry 20 is provided using any combination of one or more of a suitable central processing unit CPU, multiprocessor, microcontroller, digital signal processor DSP, etc., capable of executing software instructions stored in a computer program product, e.g. in the form of a storage medium 21. The processing circuitry 20 may further be provided as at least one application specific integrated circuit ASIC, or field programmable gate array FPGA. The processing circuitry thus comprises a plurality of digital logic components.

Particularly, the processing circuitry 20 is configured to cause the control unit 4 to perform a set of operations, or steps. For example, the storage medium 21 may store the set of operations, and the processing circuitry 20 may be configured to retrieve the set of operations from the storage medium 21 to cause the control unit 4 to perform the set of operations. The set of operations may be provided as a set of executable instructions. Thus, the processing circuitry 20 is thereby arranged to execute methods as herein disclosed.

The storage medium 21 may also comprise persistent storage, which, for example, can be any single one or combination of magnetic memory, optical memory, solid state memory or even remotely mounted memory.

The sensor signal processing control unit 4 further comprises an interface 22 for communications with at least one external device, such as a radar transceiver arrangement 5. As such the interface 22 may comprise one or more transmitters and receivers, comprising analogue and digital components and a suitable number of ports for wireline communication.

The processing circuitry 20 controls the general operation of the control unit 4, e.g. by sending data and control signals to the interface 22 and the storage medium 21, by receiving data and reports from the interface 22, and by retrieving data and instructions from the storage medium 21. Other components, as well as the related functionality, of the control node are omitted in order not to obscure the concepts presented herein.

Figure 6 shows a computer program product 30 comprising computer executable instructions 31 on computer media 32 to execute any of the methods disclosed herein.

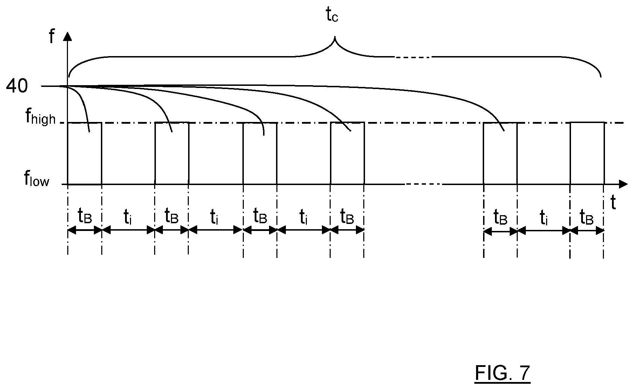

The present disclosure is not limited to the above, but is rather defined by the scope of the appended claims. For example, given an FMCW radar signal format, with reference to Figure 7, each radar cycle has a duration of a cycle time $t_c$, and comprises a plurality of pulse blocks 40, and where each pulse block 40 has a duration of a block time $t_B$. Between two consecutive pulse blocks 40 there is a certain idle time $t_i$. Each pulse block 40 comprises a plurality of FMCW ramps, and during the idle time $t_i$ between two consecutive pulse blocks 40 there are no FMCW ramps. A Range-Doppler matrix 9 is prepared for each pulse block 40, one at a time.

This enables coherent signal integration, which allows for radar signal processing (RSP) advantages such as increased Signal-to-Noise Ratio (SNR).

In this context, a radar cycle is one observation phase during which the vehicle radar system 3 is arranged to acquire data, process said data on several signal processing levels and to send out available results. This can be a fixed time interval or, alternatively, a dynamic time interval depending on environment conditions and processing load.

The present disclosure also applies to non-uniform FMCW waveforms, not just equal pulse blocks in succession, but any variety of time/phase/frequency modulation on top. In this case it is assumed that the modulations can be taken out before the present disclosure is applied.

For example, the control unit 4 may be constituted by one central device or by several separate devices that either can be located together or in a more or less distributed manner. For example, each transceiver arrangement 5 can comprise a control unit 4. In the case of two or more transceivers that comprise a corresponding control unit, these control units can work independently, or work together and/or together with a central control unit. Many configurations are of course possible.

The present disclosure also relates to a vehicle 1 comprising the vehicle radar system 3 according to the above.

**Claims**

1. A vehicle radar system (3) comprising a control unit (4) and at least one transceiver arrangement (5), each transceiver arrangement (5) being arranged to generate and transmit radar signals (6) and to receive reflected signals (7) that have been reflected by ground stationary target objects (8), **characterized in that** the vehicle radar system (3) is adapted to identify at least one ground stationary target object (8), and to follow the ground stationary target object (8) for a plurality of times ($t_1$-$t_5$), where for each one of at least two different values of a parameter ($v_{host}$, $\omega$, $\theta_{GND}$) related to, or affected by, vehicle dynamics or vehicle statics for a host vehicle (1), the parameter values being constituted by assumptions, the control unit (4) is adapted to

   - for each one of the plurality of times ($t_1$-$t_5$), calculate a coherently integrated complex signal representing the detected ground stationary target object ($8_{t1}$, $8_{t2}$, $8t_3$, $8t_4$, $8t_5$) using an assumption for said parameter ($v_{host}$, $\omega$, $\theta_{GND}$) such that a resulting signal magnitude ($A_1$, $A_2$, $A_3$, $A_4$, $A_5$) is obtained for each assumption of the parameter value ($v_{host}$, $\omega$, $\theta_{GND}$),
   where the control unit (4) further is adapted to
   - compare the resulting signal magnitudes ($A_1$, $A_2$, $A_3$, $A_4$, $A_5$), and to
   - choose the parameter assumption ($v_{host3}$) that is associated with the highest signal magnitude ($A_4$, $A_{t5}$) as the most correct parameter assumption.

2. The vehicle radar system (3) according to claim 1, wherein the parameter assumption is at least one of $v_{host} \hat{=}$ speed of

host vehicle in [m/s];

$\omega \triangleq$ yaw rate of host vehicle in [rad/s];
assumed rotation point;
$\theta_{GND} \triangleq$ bearing of ground stationary target, azimuth angle, in [rad];
elevation angle in [rad]; and
transceiver arrangement mounting position/mounting offset.

3. The vehicle radar system (3) according to any one of the claims 1 or 2, wherein the vehicle radar system (3) is a frequency modulated continuous wave, FMCW, radar system, where the radar signal (6) comprises a plurality of FMCW ramps with a frequency that varies between a low frequency ($f_{low}$) to a high frequency ($f_{high}$) over the course of each ramp.

4. The vehicle radar system (3) according to claim 3, wherein each radar cycle has a duration of a cycle time ($t_c$) and comprises a plurality of pulse blocks (40), each pulse block (40) comprising a plurality of FMCW ramps and having a duration of a block time ($t_B$), where between two consecutive pulse blocks (40) there is a certain idle time ($t_i$) during which there are no FMCW ramps.

5. The vehicle radar system (3) according to claim 4, wherein a Range-Doppler matrix (9) is prepared for each pulse block (40), one at a time.

6. The vehicle radar system (3) according to any one of the claims 3-5, wherein the FMCW ramps are constituted by non-uniform FMCW waveforms comprising any variety of time/phase/frequency modulation on top.

7. A method performed in a vehicle radar system (3), where the method comprises:

generating (S100) and transmitting radar signals (6); and
receiving (S200) reflected signals (7) that have been reflected by ground stationary target objects (8); **characterized in that** the method further comprises
identifying (S300) at least one ground stationary target object (8); and
following (S400) the ground stationary target object (8) for a plurality of times ($t_1$-$t_5$);
where, for each one of at least two different values of a parameter ($v_{host}, \omega, \theta_{GND}$) related to, or affected by, vehicle dynamics or vehicle statics for a host vehicle (1), the parameter values being constituted by assumptions, the method also comprises
calculating (S500) a coherently integrated complex signal representing the detected ground stationary target object ($8_{t1}, 8_{t2}, 8_{t3}, 8_{t4}, 8_{t5}$) for each one of the plurality of times ($t_1$-$t_5$), using an assumption for said parameter ($v_{host}, \omega, \theta_{GND}$), such that a resulting signal magnitude ($A_1, A_2, A_3, A_4, A_5$) is obtained for each assumption of the parameter value ($v_{host}, \omega, \theta_{GND}$),
comparing (S600) the resulting signal magnitudes ($A_1, A_2, A_3, A_4, A_5$), and
choosing (S700) the parameter assumption ($v_{host3}$) that is associated with the highest signal magnitude ($A_4, A_{t5}$) as the most correct parameter assumption.

8. The method according to claim 7, wherein the parameter assumption is at least one of

$v_{host} \triangleq$ speed of host vehicle in [m/s];
$\omega \triangleq$ yaw rate of host vehicle in [rad/s];
assumed rotation point;
$\theta_{GND} \triangleq$ bearing of ground stationary target, azimuth angle, in [rad];
elevation angle in [rad]; and
transceiver arrangement mounting position/mounting offset.

9. The method according to any one of the claims 7 or 8, wherein the radar signal (6) comprises a plurality of frequency modulated continuous wave, FMCW, ramps with a frequency that varies between a low frequency ($f_{low}$) to a high frequency ($f_{high}$) over the course of each ramp.

10. The method according to claim 9, wherein each radar cycle has a duration of a cycle time ($t_c$) and comprises a plurality of pulse blocks (40), each pulse block (40) comprising a plurality of FMCW ramps and having a duration of a block time ($t_B$), where between two consecutive pulse blocks (40) there is a certain idle time ($t_i$) during which there are no FMCW ramps.

11. The method according to claim 10, wherein a Range-Doppler matrix (9) is prepared for each pulse block (40), one at a time.

12. The method according to any one of the claims 9-11, wherein the FMCW ramps are constituted by non-uniform FMCW waveforms comprising any variety of time/phase/frequency modulation on top.

13. A vehicle (1) comprising the vehicle radar system (3) according to any one of the claims 1-6.

**Patentansprüche**

1. Fahrzeugradarsystem (3), umfassend eine Steuereinheit (4) und mindestens eine Transceiver-Anordnung (5), wobei jede Transceiver-Anordnung (5) angeordnet ist, um Radarsignale (6) zu erzeugen und zu übertragen und um reflektierte Signale (7) zu empfangen, die durch stationäre Zielobjekte (8) am Boden reflektiert wurden, **dadurch gekennzeichnet, dass** das Fahrzeugradarsystem (3) angepasst ist, um mindestens ein stationäres Zielobjekt (8) am Boden zu identifizieren und um das stationäre Zielobjekt (8) am Boden eine Vielzahl von Malen ($t_1$-$t_5$) zu verfolgen, wobei für jeden von mindestens zwei verschiedenen Werten eines Parameters ($v_{Host}$, $\omega$, $\theta_{GND}$), die sich auf eine Fahrzeugdynamik oder eine Fahrzeugstatik für ein Host-Fahrzeug (1) beziehen oder dadurch beeinflusst werden, die Parameterwerte aus Annahmen bestehen, wobei die Steuereinheit (4) angeordnet ist zum

   - für jedes der Vielzahl von Malen ($t_1$-$t_5$), Berechnen eines kohärent integrierten komplexen Signals, das das erkannte stationäre Zielobjekt ($8_{t1}$, $8_{t2}$, $8_{t3}$, $8_{t4}$, $8_{t5}$) am Boden darstellt, unter Verwendung einer Annahme für den Parameter ($v_{Host}$, $\omega$, $\theta_{GND}$) derart, dass eine resultierende Signalgröße ($A_1$, $A_2$, $A_3$, $A_4$, $A_5$) für jede Annahme des Parameterwerts ($v_{Host}$, $\omega$, $\theta_{GND}$) erhalten wird,
   wobei die Steuereinheit (4) ferner angepasst ist zum
   - Vergleichen der resultierenden Signalgrößen ($A_1$, $A_2$, $A_3$, $A_4$, $A_5$) und zum
   - Auswählen der Parameterannahme ($v_{Host3}$), die mit der höchsten Signalstärke ($A_4$, $A_{t5}$) verknüpft ist, als die korrekteste Parameterannahme.

2. Fahrzeugradarsystem (3) nach Anspruch 1, wobei die Parameterannahme mindestens eines ist von

   $v_{Host} \triangleq$ Geschwindigkeit des Host-Fahrzeugs in [m/s];
   $\omega \triangleq$ Gierrate des Host-Fahrzeugs in [rad/s];
   angenommener Drehpunkt;
   $\theta_{GND} \triangleq$ Peilung des stationären Ziels am Boden, Azimutwinkel, in [rad];
   Höhenwinkel in [rad]; und
   Transceiver-Anordnung Einbauposition/Einbauversatz.

3. Fahrzeugradarsystem (3) nach einem der Ansprüche 1 oder 2, wobei das Fahrzeugradarsystem (3) ein frequenzmoduliertes Dauerstrichradarsystem, FMCW-Radarsystem, ist, bei dem das Radarsignal (6) eine Vielzahl von FMCW-Rampen mit einer Frequenz umfasst, die zwischen einer niedrigen Frequenz ($f_{niedrig}$) zu einer hohen Frequenz ($f_{hoch}$) im Verlauf jeder Rampe variiert.

4. Fahrzeugradarsystem (3) nach Anspruch 3, wobei jeder Radarzyklus eine Dauer einer Zykluszeit ($t_c$) aufweist und eine Vielzahl von Impulsblöcken (40) umfasst, jeder Impulsblock (40) umfassend eine Vielzahl von FMCW-Rampen und eine Dauer einer Blockzeit ($t_B$) aufweisend, wobei zwischen zwei aufeinanderfolgenden Impulsblöcken (40) eine gewisse Leerlaufzeit ($t_i$) liegt, während der es keine FMCW-Rampen gibt.

5. Fahrzeugradarsystem (3) nach Anspruch 4, wobei für jeden Impulsblock (40) einzeln eine Range-Doppler-Matrix (9) erstellt wird.

6. Fahrzeugradarsystem (3) nach einem der Ansprüche 3 bis 5, wobei die FMCW-Rampen aus nicht gleichförmigen FMCW-Wellenformen bestehen, umfassend eine beliebige Art von Zeit-/Phasen-/Frequenzmodulation darauf.

7. Verfahren, das in einem Fahrzeugradarsystem (3) durchgeführt wird, wobei das Verfahren umfasst:

Erzeugen (S100) und Übertragen von Radarsignalen (6);

und

Empfangen (S200) von reflektierten Signalen (7), die durch stationäre Zielobjekte (8) am Boden reflektiert wurden;

**dadurch gekennzeichnet, dass** das Verfahren ferner umfasst Identifizieren (S300) mindestens eines stationären Zielobjekts (8) am Boden; und

Verfolgen (S400) des stationären Zielobjekts (8) am Boden für eine Vielzahl von Malen ($t_1$-$t_5$);

wobei für jeden von mindestens zwei verschiedenen Werten eines Parameters ($v_{Host}$, $\omega$, $\theta_{GND}$), die sich auf die Fahrzeugdynamik oder die Fahrzeugstatik für ein Host-Fahrzeug (1) beziehen oder dadurch beeinflusst werden, die Parameterwerte aus Annahmen bestehen, wobei das Verfahren ferner umfasst

Berechnen (S500) eines kohärent integrierten komplexen Signals, das das erkannte stationäre Zielobjekt ($8_{t1}$, $8_{t2}$, $8_{t3}$, $8_{t4}$, $8_{t5}$) am Boden für jedes der Vielzahl von Malen ($t_1$-$t_5$)darstellt, unter Verwendung einer Annahme für den Parameter ($v_{Host}$, $\omega$, $\theta_{GND}$) derart, dass eine resultierende Signalgröße ($A_1$, $A_2$, $A_3$, $A_4$, $A_5$) für jede Annahme des Parameterwerts ($v_{Host}$, $\omega$, $\theta_{GND}$) erhalten wird,

Vergleichen (S600) der resultierenden Signalgrößen ($A_1$, $A_2$, $A_3$, $A_4$, $A_5$), und

Auswählen (S700) der Parameterannahme ($v_{Host3}$), die mit der höchsten Signalstärke ($A_4$, $A_{t5}$) verknüpft ist, als die korrekteste Parameterannahme.

8. Verfahren nach Anspruch 7, wobei die Parameterannahme mindestens eines ist von:

$v_{Host}$ ≙ Geschwindigkeit des Host-Fahrzeugs in [m/s];

$\omega$ ≙ Gierrate des Host-Fahrzeugs in [rad/s];

angenommener Drehpunkt;

$\theta_{GND}$ ≙ Peilung des stationären Ziels am Boden, Azimutwinkel, in [rad];

Höhenwinkel in [rad]; und

Transceiver-Anordnung Einbauposition/Einbauversatz.

9. Verfahren nach einem der Ansprüche 7 oder 8, wobei das Radarsignal (6) eine Vielzahl von frequenzmodulierten Dauerstrichrampen, FMCW-Rampen, mit einer Frequenz umfasst, die zwischen einer niedrigen Frequenz ($f_{niedrig}$) zu einer hohen Frequenz ($f_{hoch}$) im Verlauf jeder Rampe variiert.

10. Verfahren nach Anspruch 9, wobei jeder Radarzyklus eine Dauer einer Zykluszeit ($t_c$) aufweist und eine Vielzahl von Impulsblöcken (40) umfasst, jeder Impulsblock (40) umfassend eine Vielzahl von FMCW-Rampen und eine Dauer einer Blockzeit (tB) aufweisend, wobei zwischen zwei aufeinanderfolgenden Impulsblöcken (40) eine gewisse Leerlaufzeit ($t_i$) liegt, während der es keine FMCW-Rampen gibt.

11. Verfahren nach Anspruch 10, wobei für jeden Impulsblock (40) einzeln eine Range-Doppler-Matrix (9) erstellt wird.

12. Verfahren nach einem der Ansprüche 9 bis 11, wobei die FMCW-Rampen aus nicht gleichförmigen FMCW-Wellenformen bestehen, umfassend eine beliebige Art von Zeit-/Phasen-/Frequenzmodulation darauf.

13. Fahrzeug (1), umfassend das Fahrzeugradarsystem (3) nach einem der Ansprüche 1 bis 6.

**Revendications**

1. Système radar de véhicule (3) comprenant une unité de commande (4) et au moins un agencement émetteur-récepteur (5), chaque agencement émetteur-récepteur (5) étant conçu pour générer et transmettre des signaux radar (6) et pour recevoir des signaux réfléchis (7) qui ont été réfléchis par des objets cibles stationnaires au sol (8), **caractérisé en ce que** le système radar de véhicule (3) est adapté pour identifier au moins un objet cible stationnaire au sol (8), et pour suivre l'objet cible stationnaire au sol (8) pendant une pluralité de temps ($t_1$-$t_5$), dans lequel pour chacune d'au moins deux valeurs différentes d'un paramètre ($v_{host}$, $\omega$, $\theta_{GND}$) lié à, ou affecté par, la dynamique de véhicule ou la statique de véhicule pour un véhicule hôte (1), les valeurs de paramètre étant constituées de hypothèses, l'unité de commande (4) est adaptée pour

- pour chacun de la pluralité de temps ($t_1$-$t_5$), calculer un signal complexe intégré de manière cohérente qui représente l'objet cible stationnaire au sol ($8_{t1}$, $8_{t2}$, $8_{t3}$, $8_{t4}$, $8_{t5}$) détecté à l'aide d'une hypothèse pour ledit paramètre ($v_{host}$, $\omega$, $\theta_{GND}$) de sorte qu'une amplitude de signal ($A_1$, $A_2$, $A_3$, $A_4$, $A_5$) résultante est obtenue pour chaque hypothèse de la valeur de paramètre ($v_{host}$, $\omega$, $\theta_{GND}$),
dans lequel l'unité de commande (4) est en outre adaptée pour
- comparer les amplitudes de signal ($A_1$, $A_2$, $A_3$, $A_4$, $A_5$) résultantes, et pour
- choisir l'hypothèse de paramètre ($v_{host3}$) qui est associée à l'amplitude de signal ($A_4$, $A_{t5}$) la plus élevée comme l'hypothèse de paramètre la plus correcte.

2. Système radar de véhicule (3) selon la revendication 1, dans lequel l'hypothèse de paramètre est au moins l'un parmi

    une vitesse $v_{host} \doteq$ du véhicule hôte en [m/s] ;
    une vitesse de lacet $\omega \doteq$ du véhicule hôte en [rad/s] ;
    un point de rotation supposé ;
    un relèvement $\theta_{GND} \doteq$ d'une cible stationnaire au sol, angle d'azimut, en [rad] ;
    un angle d'élévation en [rad] ; et
    une position de montage/un décalage de montage d'agencement émetteur-récepteur.

3. Système radar de véhicule (3) selon l'une quelconque des revendications 1 ou 2, dans lequel le système radar de véhicule (3) est un système radar à ondes entretenues modulées en fréquence, FMCW, dans lequel le signal radar (6) comprend une pluralité de rampes FMCW ayant une fréquence qui varie entre une basse fréquence ($f_{low}$) et une haute fréquence ($f_{high}$) au cours de chaque rampe.

4. Système radar de véhicule (3) selon la revendication 3, dans lequel chaque cycle radar a une durée de temps de cycle ($t_c$) et comprend une pluralité de blocs d'impulsions (40), chaque bloc d'impulsions (40) comprenant une pluralité de rampes FMCW et ayant une durée de temps de bloc ($t_B$), dans lequel, entre deux blocs d'impulsions (40) consécutifs, il y a un certain temps mort ($t_i$) pendant lequel il n'y a pas de rampes FMCW.

5. Système radar de véhicule (3) selon la revendication 4, dans lequel une matrice à portée Doppler (9) est préparée pour chaque bloc d'impulsions (40), une à la fois.

6. Système radar de véhicule (3) selon l'une quelconque des revendications 3 à 5, dans lequel les rampes FMCW sont constituées de formes d'ondes FMCW non uniformes comprenant toute variété de modulation de temps/phase/-fréquence par-dessus.

7. Procédé effectué dans un système radar de véhicule (3), dans lequel le procédé comprend :

    la génération (S100) et la transmission de signaux radar (6) ; et
    la réception (S200) de signaux réfléchis (7) qui ont été réfléchis par des objets cibles stationnaires au sol (8) ;
    **caractérisé en ce que** le procédé comprend en outre
    l'identification (S300) d'au moins un objet cible stationnaire au sol (8) ; et
    le suivi (S400) de l'objet cible stationnaire au sol (8) pendant une pluralité de temps ($t_1$-$t_5$) ;
    dans lequel, pour chacune d'au moins deux valeurs différentes d'un paramètre ($v_{host}$, $\omega$, $\theta_{GND}$) lié à, ou affecté par, la dynamique de véhicule ou la statique de véhicule pour un véhicule hôte (1), les valeurs de paramètre étant constituées de hypothèses, le procédé comprend également
    le calcul (S500) d'un signal complexe intégré de manière cohérente qui représente l'objet cible stationnaire au sol ($8_{t1}$, $8_{t2}$, $8_{t3}$, $8_{t4}$, $8_{t5}$) détecté pour chacun de la pluralité de temps ($t_1$-$t_5$), à l'aide d'une hypothèse pour ledit paramètre ($v_{host}$, $\omega$, $\theta_{GND}$), de sorte qu'une magnitude de signal ($A_1$, $A_2$, $A_3$, $A_4$, $A_5$) résultante est obtenue pour chaque hypothèse de la valeur de paramètre ($v_{host}$, $\omega$, $\theta_{GND}$),
    la comparaison (S600) des amplitudes de signal ($A_1$, $A_2$, $A_3$, $A_4$, $A_5$) résultantes, et
    le choix (S700) de l'hypothèse de paramètre ($v_{host3}$) qui est associée à l'amplitude de signal ($A_4$, $A_{t5}$) la plus élevée comme l'hypothèse de paramètre la plus correcte.

8. Procédé selon la revendication 7, dans lequel l'hypothèse de paramètre est au moins l'un parmi

    une vitesse $V_{host} \doteq$ du véhicule hôte en [m/s] ;
    une vitesse de lacet $\omega \doteq$ du véhicule hôte en [rad/s] ;
    un point de rotation supposé ;
    un relèvement $\theta_{GND} \doteq$ d'une cible stationnaire au sol, angle d'azimut, en [rad] ;
    un angle d'élévation en [rad] ; et
    une position de montage/un décalage de montage d'agencement émetteur-récepteur.

9. Procédé selon l'une quelconque des revendications 7 ou 8, dans lequel le signal radar (6) comprend une pluralité de rampes d'ondes entretenues modulées en fréquence, FMCW, ayant une fréquence qui varie entre une basse fréquence ($f_{low}$) et une haute fréquence ($f_{high}$) au cours de chaque rampe.

10. Procédé selon la revendication 9, dans lequel chaque cycle radar a une durée de temps de cycle ($t_c$) et comprend une pluralité de blocs d'impulsions (40), chaque bloc d'impulsions (40) comprenant une pluralité de rampes FMCW et ayant une durée de temps de bloc (ts), dans lequel, entre deux blocs d'impulsions (40) consécutifs, il y a un certain temps mort ($t_i$) pendant lequel il n'y a pas de rampes FMCW.

11. Procédé selon la revendication 10, dans lequel une matrice à portée Doppler (9) est préparée pour chaque bloc d'impulsions (40), une à la fois.

12. Procédé selon l'une quelconque des revendications 9 à 11, dans lequel les rampes FMCW sont constituées de formes d'ondes FMCW non uniformes comprenant toute variété de modulation de temps/phase/fréquence par-dessus.

13. Véhicule (1) comprenant le système radar de véhicule (3) selon l'une quelconque des revendications 1 à 6.

FIG. 1

$$v_{hosta3} \triangleq v_{host\ error} = -1\ m/s$$

FIG. 2

$$t = t_5 \qquad v_{hostd} \triangleq v_{host\ error} = 0$$

FIG. 3A

$t = t_5 \qquad v_{hosta1} \triangleq v_{host\ error} = +1 \text{m/s}$

FIG. 3B

$t = t_5 \qquad v_{hosta2} \triangleq v_{host\ error} = +2 \text{ m/s}$

FIG. 3C

v [m/s]

9D

A [dB]

8

v

$A_4$

R [m]

R

$t = t_5$    $v_{hosta3} \triangleq v_{host\ error} = -1\ m/s$

FIG. 3D

v [m/s]

9E

A [dB]

8

v

$A_5$

R [m]

R

$t = t_5$    $v_{hosta4} \triangleq v_{host\ error} = -2\ m/s$

FIG. 3E

```
┌─────────────────────────────────────────────────────────┐
│                         S100                            │
│          Generating and transmitting radar signals      │
└─────────────────────────────────────────────────────────┘
                            │
                            ▼
┌─────────────────────────────────────────────────────────┐
│                         S200                            │
│                Receiving reflected signals              │
└─────────────────────────────────────────────────────────┘
                            │
                            ▼
┌─────────────────────────────────────────────────────────┐
│                         S300                            │
│           Identifying ground stationary target object   │
└─────────────────────────────────────────────────────────┘
                            │
                            ▼
┌─────────────────────────────────────────────────────────┐
│                         S400                            │
│           Following ground stationary target object     │
└─────────────────────────────────────────────────────────┘
                            │
                            ▼
┌─────────────────────────────────────────────────────────┐
│                         S500                            │
│        Calculating coherently integrated complex signal │
└─────────────────────────────────────────────────────────┘
                            │
                            ▼
┌─────────────────────────────────────────────────────────┐
│                         S600                            │
│             Comparing resulting signal magnitudes       │
└─────────────────────────────────────────────────────────┘
                            │
                            ▼
┌─────────────────────────────────────────────────────────┐
│                         S700                            │
│                 Choosing parameter value                │
└─────────────────────────────────────────────────────────┘
```

FIG. 4

4

20
processing
circuitry

21
storage

22
interface

FIG. 5

30

31

32

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2363016 A
- US 2015070207 A1
- EP 3098623 A